# EUROPEAN PATENT SPECIFICATION

(11) **EP 0 917 426 B1**
(45) Date of publication and mention of the grant of the patent: **30.06.2004**
(21) Application number: 98920156.1
(22) Date of filing: 29.04.1998
(51) Int. Cl.: A01N 27/00

(54) **ANT SPRAY CONTAINING D-LIMONENE AND METHODS OF MAKING AND USING SAME**
D-LIMONEN ENTHALTENDES AMEISENSPRAY UND VERFAHREN ZU SEINER HERSTELLUNG UND VERWENDUNG
PULVERISATION ANTI FOURMIS CONTENANT DU D-LIMONEME ET SES PROCEDES DE FABRICATION ET D'UTILISATION

(30) Priority: 30.04.1997 US 846351
(43) Date of publication of application: 26.05.1999
(73) Proprietor: McPartland, Tor, Carmel Valley, CA 93924 (US)
(72) Inventor: McPartland, Tor, Carmel Valley, CA 93924 (US)
(74) Representative: Goddar, Heinz J., Dr.
(86) International application number: PCT/US1998/008954
(87) International publication number: WO 1998/048625

(56) References cited:
- CA-A- 2 060 594
- GB-A- 1 603 047
- US-A- 3 930 010
- US-A- 4 379 168
- US-A- 5 085 849
- US-A- 5 194 264
- US-A- 5 474 712
- US-A- 5 653 991

## Description

### Field of Invention

The present invention generally relates to an insecticidal composition that is effective in controlling insects including ants, aphids, mealy bugs, white flies, spider mites, leaf hoppers, cabbage loopers, leaf eating beetles and caterpillars, cockroaches, flies, wasps, body and head lice and more particularly relates to an insecticidal composition that contains D-limonene, a non-toxic hydrophilic solvent, a non-toxic emulsifying agent, and a preservative, that is effective in repelling and killing insects but is non-toxic to humans and household animals, and not harmful to landscaping, particularly rose bushes and ornamentals, indoor plants or the environment.

### Background of the Invention

Numerous pesticide and insecticide products are available in the market for killing insects such as ants. However, these products are generally toxic to humans and household animals, and harmful to plants and the environment. Therefore they must be administered with extreme care. This is especially a problem in the termination of ants, cockroaches and the like because they normally appear near food where a careless use of insecticides may cause accidental poisoning of humans and household animals.

Other insecticide products containing D-Limonene disperse the D-Limonene in mineral oil petroleum distillates which may be harmful if accidentally ingested and may cause damage to plants. Unlike the compositions of the present invention, no emulsifier is used because the D-Limonene is dispersed in oil and not water.

Lice infestation of humans, particularly children, is still treated with compositions that contain the pesticide lindane. Lindane may be carcinogenic. There exists a need for a composition which can treat body and head lice but which is safe to use, particularly on children.

U.S. Patent No. 4,379,168 to Dotolo discloses pesticides containing D-linionene as an insect-killing ingredient along with water-soluble surfactants or emulsifiers, and water. The pesticide compositions are designed for use mainly as a dip to rid small animals of fleas and ticks and as a spray to kill fleas and ticks on small animals. None of the compositions taught by Dotolo contain suitable amounts of emulsifying agent and D-limonene for the purpose of the present invention. None of the compositions taught by Dotolo contain any surfactants or emulsifiers that were selected for their safety. For example, the Kodak Laboratory Chemical Catalog No. 51 indicates that Triton X-100, which is disclosed as an acceptable emulsifier in Dotolo, is irritating to the skin and eyes.

U.S. Patent No. 3,023,144 to Greathouse, et al., discloses germicides and fungicides containing about 25% by weight D-limonene, about 1% by weight of p-methyl acetophenone, and other unsaturated hydrocarbon cleavage products of D-limonene, up to about 7% by weight concentrated citrus oil foots and from 0.25% up to about 10% by weight salicylic acid. The compositions are used for topical application on humans and animals to control infections of skin and external organs arising from wounds or from infestation by fungi, bacteria, and larvae. Greathouse discloses that the active ingredient for the biocidal activity of the compositions disclosed is not D-limonene but rather compounds such as p-methyl acetophenone, and other unsaturated hydrocarbon cleavage products of D-limonene.

CA-A-2060594 discloses a licidal formulation using d-limonene as an active ingredient in pharmaceutical preparations for the destruction and/or prevention of lice. Further, a surfactant or emulsifier is used in the shampoo formulation as well as water as the hydrophilic solvent. A preservative is also included.

GB-A-1603047 discloses a cleaning solution based on 10 to 50 % d-limonene, 3 to 18 % emulsifier and water to volume.

US-A-5474712 describes a livestock conditioning shampoo consisting of sodium lauryl sulfate, polyoxyethylene (20) sorbitan monolaurat, d-limonene, polyacrylic acid, acrylic copolymer emulsifier, butylated hydroxytoluene, triethanolamine, polyalkylenoxide-modified polydimethylsiloxane, disodium EDTA and water.

US-A-4379168 describes an insecticidal composition, containing 2 to 10 % d-limonene, 1-7 % emulsifier and water by volume. It is employed effectively for killing fleas and ticks and may be applied to surfaces to kill cockroaches.

US-A-5653991 describes a composition based on food grade compounds such as d-limonene used to repel and kill insects on plants including ornamental plants. The terpene is formulated with a non-toxic white mineral oil with which it acts to destroy the protective wax coating of the insects integument. A surfactants is also used.

It is therefore an object of the present invention to overcome the various drawbacks associated with the use of prior art pesticide compositions.

It is another object of the present invention to provide an insecticidal composition that controls insects such as ants, aphids, mealy bugs, white flies, spider mites, leaf hoppers, cabbage loopers, leaf eating beetles and caterpillars, cockroaches, flies, wasps, body and head lice by repelling them, and which is non-toxic to humans, household animals and house plants.

It is yet another object of the present invention to provide an insecticidal composition that is effective in controlling insects such as ants, aphids, mealy bugs, white flies, spider mites, leaf hoppers, cabbage loopers, leaf eating beetles and caterpillars, cockroaches, flies, wasps, body and head lice by killing them, and which is non-toxic to humans, household animals and house plants.

It is another object of the present invention to provide a safe and effective treatment for lice infestation of a human.

It is another further object of the present invention to provide an insecticidal composition that contains an insecticide made from a natural substance that is part of and therefore not harmful to landscaping, particularly rose bushes and ornamentals, indoor plants or the environment.

It is yet another further object of the present invention to provide an insecticidal composition that contains D-limonene, a non-toxic emulsifying agent, a preservative, and a non-toxic hydrophilic solvent.

It is yet another further object of the present invention to provide an insecticidal composition that contains D-limonene, a non-toxic emulsifying agent, a preservative, and water and is suitable for application as a spray.

### Summary of the Invention

In accordance with the present invention, insecticidal compositions and methods of making and of using such compositions are disclosed.

A new and novel insecticidal composition can be made by use of the naturally occurring substance of D-limonene as a major ingredient of the insecticide. D-limonene can be obtained from steam extraction of citrus peels of orange, lemon, lime, grapefruit and bergamot, some of the extractions can contain as high as 90% D-limonene. The process therefore provides a valuable use of what would otherwise be a waste product. Distillation of the oils produces technical grades of D-limonene of higher purity, *i*.*e*., from about 95% to about 96%. D-limonene has a pleasant citrus scent. It can be suitably used in any living environment.

An insecticidal composition according to the present invention is disclosed in claim 1. A method of making an insecticidal composition according to the invention is disclosed in claim 9. A method of controlling insects according to the invention is disclosed in Claim 13.

An insecticidal composition according to the present invention can be formulated by using between 1% to 20% by weight of D-limonene, between 1% to 25% by weight of a non-toxic emulsifying agent, such as Alkamuls EL620, between 0.01% to 5% by weight of a preservative, and the balance of a non-toxic hydrophilic solvent.

A preferred concentration range is between 1% to 10% by weight of D-limonene, between 5% to 15% by weight of a non-toxic emulsifying agent, such as Alkamuls EL620, between 0.01% to 1% by weight of a preservative, and the balance of water.

The present invention further teaches a method of using an insecticidal composition by applying such composition by, for example, spraying either directly on insects, such as ants, or in areas where insects, such as ants, frequently appear. The non-toxic insecticidal composition has a pleasant citrus scent and is suitable for use in any living environment. It was further discovered that when the present invention is applied to solid surfaces and left to remain there, the residual effect of the insecticidal composition will last for a period of time effectively keeping insects, such as ants, away from the treated area.

The present invention also teaches a method of applying the present insecticidal composition on a rose bush or other ornamental plant to control insects.

The present invention also teaches a method of using an insecticidal composition to treat humans, particularly children, infected with lice, particularly head lice.

### Detailed Description of Preferred Embodiment

The present invention can be formulated by utilizing the naturally occurring substance D-limonene. D-limonene, otherwise known as orange limonene or 1-methyl-4-(1 methylethenyl) cyclohexene or 4-isopropenyl-1-methyl cyclohexene has a chemical formula of C₁₀H₁₆, a molecular weight of 136.2, and contains 88.1% C and 11.8% H by weight. It occurs in various ethereal oils, particularly in oils of lemon, orange, lime, grapefruit and bergamot. The D-form of limonene is a liquid having a boiling point of 175.5-176°C. It can be commercially obtained from Lykes Pasco Packing Company (Dade City, Florida) or Florida Chemical Company (Lake Alfred, Florida).

The compositions of the present invention allow a user to provide insect control in interior and exterior settings. Insect control can include repelling and/or killing insects, such that less insects are alive or present in a given area than if the compositions of the present invention had not been applied in the area.

While not limiting the invention by any particular theory, it is believed that the D-limonene acts to soften the waxy coating on the exoskeleton of insects and thereby causes the softened coating to clog the external insect respiratory organs, known as spiracles. The clogged spiracles interfere with the ability of the insect to obtain adequate amounts of oxygen, ultimately resulting in the death of the insect. This invention is therefore also suitable against other pests, besides insects, which would be susceptible to the external effects set forth above.

An emulsifying agent is necessary to disperse the D-limonene evenly in a non-toxic hydrophilic solvent, such as water. Other non-toxic hydrophilic solvents, for example, ethanol, dilute acetic acid solutions, and the like can be suitably used. It was discovered that a suitable emulsifying agent should be a non-toxic type such as a polyethoxylated castor oil. One such emulsifying agent is available commercially under the trade name of Alkamuls EL620 from Rhone Poulenc Co. It is non-toxic to humans, household animals and house plants and landscaping and will not cause skin or eye irritation. Other commercially available emulsifying agents that are non-toxic such as polyoxyethylenesorbitans supplied by ICI Americas or Sigma Chemical Company may also be suitably used for the present invention. In a preferred embodiment a polyoxyethylenesorbitan monooleate such as Tween 80 may be used.

In general, the emulsifying agent should be present in an amount sufficient to render the D-limonene soluble in the non-toxic hydrophilic solvent. When a polyethoxylated castor oil is used, it should contain sufficient polyethoxylation to render the D-limonene soluble in a non-toxic hydrophilic solvent when the emulsifying agent is used in an amount as disclosed herein.

In order to provide a reasonable shelf-life to the insecticidal compositions, it is preferable that a preservative be added to the composition. One such suitable preservative is sodium benzoate commercially supplied by Pfizer, Inc. Other commercially available preservatives used for preserving food, as would be known to those of ordinary skill in the art, may also be suitably used.

A novel insecticidal composition which may be suitable for application as a spray can be formulated with between 1% to 20% by weight of D-limonene, between 1% to 25% by weight of Alkamuls EL620 (a non-toxic emulsifying agent), between 0.01% to 5% by weight of a preservative, and the balance of water. A more preferred composition contains between 1% to 10% by weight of D-limonene, between 5% to 15% by weight of Alkamuls EL620, between 0.01% to 1.0% by weight of a preservative, and the balance of water.

A specific example of the present invention is made of 5.8% by weight of D-limonene, 10% by weight of Alkamuls EL620 (polyethoxylated caster oil), 0.1% by weight of sodium benzoate, and the balance of water.

The insecticidal composition made by the above specific formulation has a white, opalescent color. Its physical state is a liquid at 25 degrees Centigrade and has a citrus-like odor. It has a boiling point between 99-100 degrees Centigrade and a specific gravity of 0.9753 gm/ml. It is soluble in water and has a pH of 6.1. The flash point of the insecticidal composition is greater than 60 degrees Centigrade. It has a viscosity of 1.97 centipoise at 37.8 degrees Centigrade.

The insecticidal composition formulated according to the present invention is non-toxic to humans and household animals such as dogs, cats, rabbits, etc. It can be used near food without any danger of contamination or accidental poisoning. It will not harm landscaping foliage or indoor plants. It leaves a pleasant citrus-like smell which is not objectionable to most people. Since it is made of mainly naturally occurring material, it is not harmful to the environment and does not cause any unwanted pollution. It is also completely biodegradable.

When the novel insecticidal composition is used indoors as a spray, it should be sprayed preferably from about 6 to about 8 inches away from and directly on insects such as ants, or on insect trails such as ant trails to the source of the insects such as ants and sprayed until visibly wet. Insects are typically killed within minutes of contact with the novel insecticidal compositions.

The insecticidal composition can be used on the interior surfaces in a building such as counter tops and in food preparation areas. For outdoor use, the insecticidal composition of the present invention should be applied at the perimeter of a building such as a home, at insect trails such as ant trails, at insect nests, such as ant nests and at doors, cracks, and window frames where insects, such as ants may enter the building. It should be applied until visibly wet. It will provide lasting repellent qualities.

Application of the present insecticidal compositions is preferably effected by spraying of the insecticidal compositions by conventional spray apparatus such as aerosol cans bug sprayers and the like. However, application may also be effected by any means of contacting surfaces to be treated, for example, with a brush which has been dipped in the insecticidal compositions. Because the novel insecticidal compositions are non-toxic, they can also be applied with a human hand.

When the novel insecticidal composition is used to treat humans infected with lice, it should be applied to the infected area, such as the scalp and left on for about 5 minutes after which it may be rinsed and preferably shampooed off.

The embodiments of the invention in which an exclusive property or privilege is claimed are defined as follows:

## Claims

1. A food-grade insecticidal composition, comprising an amount of D-limonene sufficient to provide insect control, a non-toxic hydrophilic solvent, an amount of a non-toxic emulsifying agent sufficient to solubilize D-limonene in said non-toxic hydrophilic solvent, wherein the non-toxic emulsifying agent is polyethoxylated castor oil or polyoxyethylenesorbitan.

2. The insecticidal composition according to claim 1 comprising 1 % to 20 % by weight of D-limonene, 1 % to 25 % by weight of said non-toxic emulsifying agent, and 98 % to 55 % by weight of said non-toxic hydrophilic solvent.

3. The insecticidal composition according to claim 1 further comprising a food-grade preservative.

4. The insecticidal composition according to claim 3 comprising 0.01 % to 5 % by weight of said preservative.

5. The insecticidal composition according to claim 1 wherein said non-toxic hydrophilic solvent is water.

6. The insecticidal composition according to claim 3 wherein said preservative is a food preservative.

7. The insecticidal composition according to claim 1 which controls at least one insect selected from the group consisting of ants, aphids, mealy bugs, white flies, spider mites, leaf hoppers, cabbage loopers, leaf eating beetles and caterpillars, cockroaches, flies, wasps, body lice and head lice.

8. The insecticidal composition according to claim 1 comprising 1 % to 10 % by weight of D-limonene, 5 % to 15 % by weight of a non-toxic emulsifying agent, and 94 % to 75 % by weight of a non-toxic hydrophilic solvent.

9. A method of making an insecticidal composition comprising the step of combining an amount of D-limonene sufficient to provide insect control with a non-toxic hydrophilic solvent and an amount of a non-toxic emulsifying agent sufficient to solubilize D-limonene in said non-toxic hydrophilic solvent, wherein all said ingredients are food-grade, wherein said non-toxic emulsifying agent is polyethoxylated castor oil or polyoxyethylenesorbitan.

10. The method of claim 9 comprising the step of combining 1 % to 20 % by weight of D-limonene, 1 % to 25 % by weight of said non-toxic emulsifying agent and 97.99 % to 50 % by weight of said non-toxic hydrophilic solvent.

11. The method of claim 10 wherein said solvent is water.

12. The method of claim 10 wherein said ingredients are combined with 0.01 % to 5 % by weight of a preservative.

13. A method of controlling insects comprising the step of applying the insecticidal composition of claim 1 to one selected from the group consisting of an insect, an insect trail, an insect nest, a building surface, a building perimeter and a plant.

14. The method of claim 13 wherein said insects to be controlled are on plants.

15. The method of claim 14 wherein said plants are selected from the group consisting of rose bushes and ornamentals.

## Patentansprüche

1. Lebensmitteltaugliche Insektizidzusammensetzung, welche eine Menge an D-Limonen, die ausreichend ist, um eine Insektenkontrolle bereitzustellen, ein nicht toxisches hydrophiles Lösungsmittel, eine Menge eines nicht toxischen emulgierenden Agens, die ausreichend ist, um D-Limonen in dem nicht toxischen hydrophilen Lösungsmittel löslich zu machen, umfasst, wobei das nicht toxische emulgierende Agens polyethoxyliertes Kastoröl oder Polyoxyethylen-Sorbitan ist.

2. Insektizidzusammensetzung nach Anspruch 1, welche 1 Gew.-% bis 20 Gew.-% D-Limonen, 1 Gew.-% bis 25 Gew.-% des nicht toxischen emulgierenden Agens und 98 Gew.-% bis 55 Gew.-% des nicht toxischen hydrophilen Lösungsmittels umfasst.

3. Insektizidzusammensetzung nach Anspruch 1, welche weiter ein lebensmitteltaugliches Konservierungsmittel umfasst.

4. Insektizidzusammensetzung nach Anspruch 3, welche 0,01 Gew.-% bis 5 Gew.-% des Konservierungsmittels umfasst.

5. Insektizidzusammensetzung nach Anspruch 1, **dadurch gekennzeichnet, daß** das nicht toxische hydrophile Lösungsmittel Wasser ist.

6. Insektizidzusammensetzung nach Anspruch 3, **dadurch gekennzeichnet, daß** das Konservierungsmittel ein Lebensmittelkonservierungsmittel ist.

7. Insektizidzusammensetzung nach Anspruch 1, welche wenigstens ein Insekt kontrolliert, das ausgewählt ist aus der Gruppe bestehend aus Ameisen, Blattläusen, Mehlwanzen, Weißfliegen, Spinnenmilben, Blatthüpfer, Kohlspannerraupen, blätteressenden Käfern und Raupen, Küchenschaben, Fliegen, Wespen, Körperläusen und Kopfläusen.

8. Insektizidzusammensetzung nach Anspruch 1, welche 1 Gew.-% bis 10 Gew.-% D-Limonen, 5 Gew.-% bis 15 Gew.-% eines nicht toxischen emulgierenden Agens und 94 Gew.-% bis 75 Gew.-% eines nicht toxischen hydrophilen Lösungsmittels umfasst.

9. Verfahren zum Herstellen einer Insektizidzusammensetzung, umfassend den Schritt eines Kombinierens einer Menge an D-Limonen, die ausreichend ist, um eine Insektenkontrolle bereitzustellen, mit einem nicht toxischen hydrophilen Lösungsmittel und einer Menge eines nicht toxischen emulgierenden Agens, die ausreichend ist, um D-Limonen in dem nicht toxischen hydrophilen Lösungsmittel löslich zu machen, wobei alle Bestandteile lebensmitteltauglich sind, wobei das nicht toxische emulgierende Agens polyethoxyliertes Kastoröl oder Polyoxyethylen-Sorbitan ist.

10. Verfahren nach Anspruch 9, umfassend den Schritt eines Kombinierens von 1 Gew.-% bis 20 Gew.-% D-Limonen, 1 Gew.-% bis 25 Gew.-% des nicht toxischen emulgierenden Agens und 97,99 Gew.-% bis 50 Gew.-% des nicht toxischen hydrophilen Lösungsmittels.

11. Verfahren nach Anspruch 10, **dadurch gekennzeichnet, daß** das Lösungsmittel Wasser ist.

12. Verfahren nach Anspruch 10, **dadurch gekennzeichnet, daß** die Inhaltsstoffe mit 0,01 Gew.-% bis 5 Gew.-% eines Konservierungsmittels kombiniert werden.

13. Verfahren zum Kontrollieren von Insekten, umfassend den Schritt eines Auftragens der Insektizidzusammensetzung nach Anspruch 1 auf eines ausgewählt aus der Gruppe bestehend aus einem Insekt, einem Insektenschwanz, einem Insektennest, einer Gebäudeoberfläche, eines Gebäudeumkreis und einer Pflanze.

14. Verfahren nach Anspruch 13, **dadurch gekennzeichnet, daß** die zu kontrollierenden Insekten auf Pflanzen sind.

15. Verfahren nach Anspruch 14, **dadurch gekennzeichnet, daß** die Pflanzen ausgewählt werden aus der Gruppe bestehend aus Rosensträuchern und Zierpflanzen.

## Revendications

1. Composition insecticide propre à la consommation, comprenant une quantité de D-limonène suffisante pour fournir un moyen de contrôle des insectes, un solvant hydrophile non toxique, une quantité d'agent émulsifiant non toxique suffisante pour solubiliser le D-limonène dans ledit solvant hydrophile non toxique, dans laquelle l'agent émulsifiant non toxique est de l'huile de ricin polyéthoxylée ou du polyoxyéthylène sorbitane.

2. Composition insecticide selon la revendication 1, comprenant de 1 % à 20 % en poids de D-limonène, de 1 % à 25 % en poids dudit agent émulsifiant non toxique, et de 98 % à 55 % en poids dudit solvant hydrophile non toxique.

3. Composition insecticide selon la revendication 1, comprenant en outre un agent de conservation propre à la consommation.

4. Composition insecticide selon la revendication 3, comprenant de 0,01 % à 5 % en poids dudit agent de conservation.

5. Composition insecticide selon la revendication 1, dans laquelle ledit solvant hydrophile non toxique est de l'eau.

6. Composition insecticide selon la revendication 3, dans laquelle ledit agent de conservation est un agent de conservation alimentaire.

7. Composition insecticide selon la revendication 1, qui contrôle au moins un insecte choisi dans le groupe consistant en des fourmis, des pucerons, des cochenilles, des mouches blanches, des tétranyches, des cicadelles, des arpenteuses du chou, des chrysomèles et des chenilles des limbes, des blattes, des mouches, des guêpes, des poux du corps et de la tête.

8. Composition insecticide selon la revendication 1, comprenant de 1 % à 10 % en poids de D-limonène, de 5 % à 15 % en poids d'un agent émulsifiant non toxique, et de 94 % à 75 % en poids de solvant hydrophile non toxique.

9. Procédé de fabrication d'une composition insecticide comprenant l'étape consistant à combiner une quantité de D-limonène suffisante pour fournir un moyen de contrôle des insectes avec un solvant hydrophile non toxique et une quantité d'agent émulsifiant non toxique suffisante pour solubiliser le D-limonène dans ledit solvant hydrophile non toxique, dans laquelle tous lesdits ingrédients sont propres à la consommation, dans laquelle ledit agent émulsifiant non toxique est de l'huile de ricin polyéthoxylée ou du polyoxyéthylène sorbitane.

10. Procédé selon la revendication 9, comprenant l'étape consistant à combiner de 1 % à 20 % en poids de D-limonène, de 1 % à 25 % en poids dudit agent émulsifiant non toxique et de 97,99 % à 50 % en poids dudit solvant hydrophile non toxique.

11. Procédé selon la revendication 10, dans lequel ledit solvant est de l'eau.

12. Procédé selon la revendication 10, dans lequel lesdits ingrédients sont combinés avec 0,01 % à 5 % en poids d'un agent de conservation.

13. Procédé de contrôle des insectes, comprenant l'étape consistant à appliquer la composition insecticide de la revendication 1 à un élément choisi dans le groupe consistant en un insecte, une piste d'insecte, un nid d'insecte, une surface d'habitation, un périmètre d'habitation et une plante.

14. Procédé selon la revendication 13, dans lequel lesdits insectes destinés à être contrôlés sont sur des plantes.

15. Procédé selon la revendication 14, dans lequel lesdites plantes sont choisies dans le groupe consistant en des rosiers et des plantes d'ornement.
